# EUROPEAN PATENT APPLICATION

(11) **EP 2 863 504 A1**
(43) Date of publication of application: **22.04.2015**
(21) Application number: 12878804.9
(22) Date of filing: 13.06.2012
(51) Int. Cl.: H02G 15/013, H02G 15/192, H01R 4/38

(54) **CABLE ADAPTER FOR ELECTRICAL CONNECTORS**

(71) Applicant: Ridelin, S.L., 08240 Manresa (Barcelona) (ES)
(72) Inventor: RIERA CAPELLES, Joaquim, E-08240 Manresa (Barcelona) (ES)
(74) Representative: Morgades y Manonelles, Juan Antonio
(86) International application number: PCT/ES2012/070437
(87) International publication number: WO 2013/186403

(57) **Abstract**

It is an insulated device capable of being applied easily and safely, in terms of the tightness of the connection against moisture, to a conventional electrical connector, which enables to connect insulated cables to the electricity distribution networks, by means of easy placement thereof inside a connector which perforates the insulation.

The device is configured such as to be capable of being connected inside a longitudinal housing of an electrical connector and includes an elongate body provided with an inner longitudinal opening through which one or more electric cables having different cross-sections can pass and can be retained inside the same, thus making it possible, once the electric cable or cables have been inserted in the aforementioned opening of the adapter, for the toothed contacts of the electrical connector to provide electrical contact by perforating the insulators of the cables.

## Description

### Field of the invention:

The cable adapter referred in this invention is an insulated device designed to be applied to an electrical connector, which enables insulated cables to be connected to electricity distribution circuits by fitting them in connectors and perforating their insulation.

### State of the Art:

There are different types of electrical connector devices used for connections in electrical circuits on the market.

Electrical connectors enable electrical connections for instance in underground electrical circuits and in the electrical circuits of buildings, by using connectors with toothed clamps inside them, making electrical contact by perforating the insulation of the main conductor and of the branch conductor and which incorporate means to control the tightness applied when fitting, as well as sealing from water.

There are single-section electrical connectors, i.e., those that enable the connection of a single section of cable; As well as multi-section electrical connectors, i.e., that allow the connection of several cable sections, for instance a cable with greater section and beside it (in the same connector) a smaller section cable. The cable/s are placed passing through the connector longitudinally inside their respective longitudinal housings in the electrical connector.

For example, Spanish patent No. 200301567 describes a connector used to make connections in electrical circuits, which has clamp-type toothed contacts inside that make the electrical connection by perforating the cable insulation.

However, this type of connector does not have proper housings for positioning the electric cables, so they are not correctly centred in width or height, neither are they correctly held to be conveniently perforated, which results in a reliability problem for the electrical connectors.

It is therefore necessary to design a device to be able to properly receive, centre and hold electric cables of several sizes in electrical connector housings.

### Object of the Invention:

The main object of this invention is to provide an insulated device that will receive, centre and retain electric cables properly inside a connector and that will enable the connection of insulated cables to electric distribution circuits by placing them inside a connector and perforating their conventional insulation.

The second purpose of this invention is that it can be easily and safely fitted to multi-section electrical connectors, i.e., those that enable the connection of several sections of wires to position them with regard to the contact surfaces of the connector, and in addition, it ensures the watertightness of the connection.

The third and last purpose of this invention is to provide an assembly formed by the insulated device together with a multi-section electrical connector.

### Description of the Invention :

The object of this invention is characterised as defined in claim 1.

The cable adapter object of this invention is configured such as to be capable of being connected inside a longitudinal housing of an electrical connector and includes an elongate body provided with an inner longitudinal opening through which one or more electric cables having different cross-sections can pass and can be retained inside the same, thus making it possible, once the electric cable or cables have been inserted in the aforementioned opening of the adapter, for the toothed contacts of the electrical connector to provide electrical contact by perforating the insulators of the cables.

The body of the cable adapter will preferably have a cylindrical external shape, although other configurations are possible, and the inner longitudinal opening is open at least at one of its ends, so it can house at least one electric cable inside.

A preferred embodiment of the body of the adapter has a front part or head of greater diameter, and a rear portion of greater length and smaller diameter, so said recess acts as a fitting surface and stop inside the housing the connector is placed inside and will thus correctly locate it inside. The connector may have a retaining plate that acts as a stop for positioning in the connector and also as a positioning element in the connector. This retaining plate will have a design and thickness that enable a cable to be properly inserted in the vertical groove in the U-shaped mouths of the connector, avoiding movement in "X" direction, in "Z" direction, as well as rotation in the "Z" axis of the adapter with regard to the electrical connector and thereby position it so that it cannot move. This retaining plate is preferably placed at the innermost part of the front, although other locations are also possible.

In addition, this retaining plate incorporates an elongated end designed to be inserted in a through hole in the lower base of the U-shaped mouth of the connector, so that once positioned in said hole, it is perfectly secured and will not move, and in addition this projecting portion may be very useful for the user to position and handle the adapter in the electrical connector. In addition, this elongated end portion may have a hook or clamp at the end, designed to act as a stop with the lower side of the U-shaped mouth and stop the adapter from moving vertically upward and becoming released from the connector.

This plate may be fitted to the outer body of the adapter or even be an integral part of it, or may be an independent from the adapter, anchored or secured to it by any known means.

The body of the adapter is preferably closed at the rear, i.e. at the opposite end to the mouth of the hole, with a substantially conical shape, so the inner face acts as a cable stop when it is inserted.

The cable adapter is positioned inside the electrical connector in longitudinal position, being located in one of its inner longitudinal housings and between the upper and lower pressure elements that clamp the connector, so its maximum external diameter at its lower rear part that is less than the distance between the lower point of the lower pressure element and the upper point of the upper pressure element, so that it is possible to insert the cable adapter in the hole between the upper and lower pressure members of the connector.

A preferred embodiment of the cable adapter incorporates means to secure and centre the electric cable. These means of securing and centring preferably have a mouth in the front of the longitudinal opening, adapted to retain and centre the electric cable, made of elastic elements that form a substantially conical-shaped radial structure that begins at the front of the adapter and extends partially back into the hole. This mouth has a central orifice, through which the electric cable is inserted. The electric cable can be of different sections, as these elastic elements adapt around the exterior surface of the cable.

In addition, the cable adapter has means to seal the electric cable at the area close to the orifice entrance, once it has been correctly inserted into the hole until it reaches the stop. A preferred embodiment of the means for sealing comprises a truncated cone shaped element that adapts to the cable section, and that is fitted in the inner front part of the adapter, being positioned within the body, butted up against an annular recess on the inside of the adapter in an area close to the entrance of the orifice, so that the front of the sealing element does not project from the front end of the orifice.

These means for sealing may also incorporate a ring for securing the sealing element, for which the ring fits to the frontal base of the sealing element.

The cable adapter for electrical connectors incorporates anchoring points for securing it to the connector.

The adapter may be made in one piece or several parts fitted together, for instance the truncated cone shaped element and the means for securing and centring the electric cable are independent parts fitted to the outside of the body of the adapter.

The body of the adapter may have one or more longitudinal slots on its external surface, to enable its deformable body to deform when pressed by the connector.

As mentioned above, once the electrical cable or cables are inserted into hole, the toothed contacts of the electrical connector make electrical contact by perforating the cable insulation, so that the material used for the insulation is of such a nature that can easily be perforated by the teeth on the clamp, so the material of the body of the adapter is deformable as well as insulating. For example, one of the possible materials used could be plastic, so the adapter can be manufactured partial or totally in plastic, although other similar materials could be used.

Another purpose of this invention is to provide a set or kit formed by the insulated device purpose of the present invention along with a conventional electrical connector, which could be multi-section or single-section connector.

Other details and characteristics shall be shown throughout the description below referring to drawings attached to this report which are shown for illustrative but not limiting purposes only in a drawing of the invention.

### Brief description of the drawings:

Below is a list of the different parts of the invention, which are found in the attached drawings with their respective numbers indicated on the diagrams: (10, 10') cable adapter, (11) connector, (12) longitudinal opening of the adapter, (13) mouth of the adapter, (14) front part of the adapter, (15) rear portion of the adapter, (16) sealing element, (17) retaining plate, (19) end portion of the adapter, (20) opening of the mouth (13), (21) annular recess, (22) securing ring, (23) first cable, (24) second cable, (25a, 25b) pressure elements, (26) clamps, (27) longitudinal slot of the adapter, (28) vertical grooves in the mouths (32) of the connector, (29) hole in the lower base of the connector, (30) elongated end portion, (31) end of the portion (30), (32) U-shaped mouth of one of the connector housings (10, 10').

In the drawings:
Figure 1 is a front perspective view of the cable adapter of the invention (10).
Figure 2 is a rear perspective view of the cable adapter of the invention (10).
Figure 3 is a front elevation view of the cable adapter of the invention (10).
Figure 4 is a top plan view of the cable adapter of the invention (10).
Figure 5 is a side elevation view of the cable adapter of the invention (10).
Figure 6 is a longitudinal cut-away view by A-A of figure 5 of the cable adapter of the invention (10).
Figure 7 is a front perspective view where a second embodiment of the adapter cable (10') is shown, wherein the retaining plate (17) is fully integrated into the body of the adapter (10').
Figure 8 is a front perspective view wherein the second embodiment of the adapter cable (10') is shown mounted on a multi-section connector (11).
Figure 9 is a top plan view wherein the second embodiment of the adapter cable (10') is shown mounted on a multi-section connector (11) of figure 8.
Figure 10a shows a side elevation view of the multi-section connector (11) of figure 8 where cable adapter has been fitted, and which illustrates how a first cable, of greater section (23) and a thinner second cable (24) would be fitted, the second cable (24) being badly positioned, as it is pushed to the right.
Figure 10b corresponds to the same side elevation view of figure 10a, but incorporating the second embodiment of the cable adapter (10') in figure 7, fitted to one of the housings of the multi-section connector (11), and in which you can see how the first cable (23) and a second thinner cable (24) would be located, in this case the second cable (24) is correctly centred both in width and height inside the cable adapter housing (10').
Figure 11 is a longitudinal cut-away view by B-B of figure 10b.

### Description of a possible embodiment of the invention:

As can be seen in the attached drawings, the cable adapter described in this invention can be made as a single piece or of several parts fitted together.

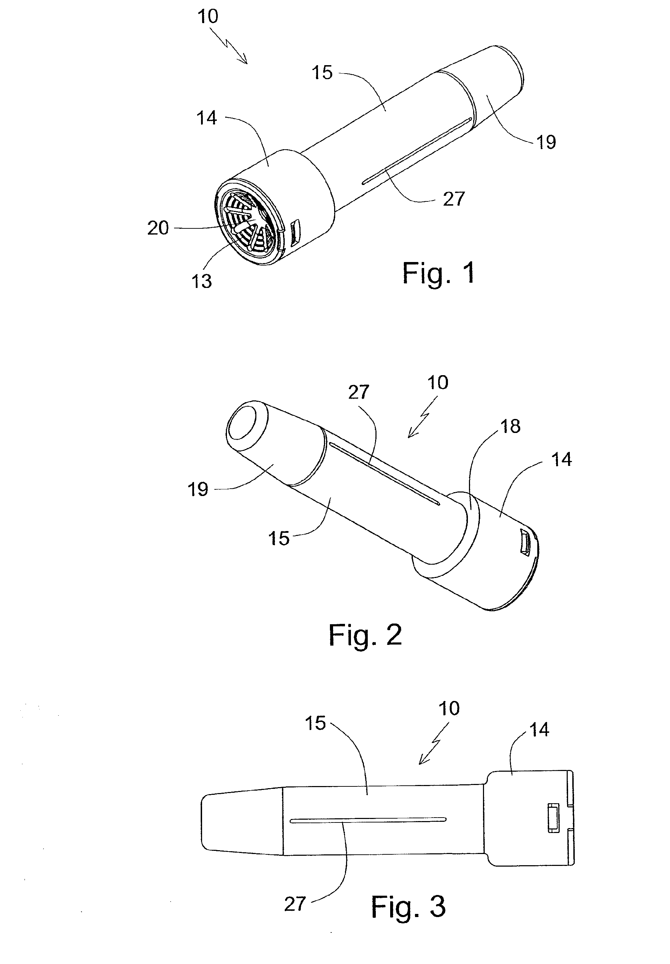

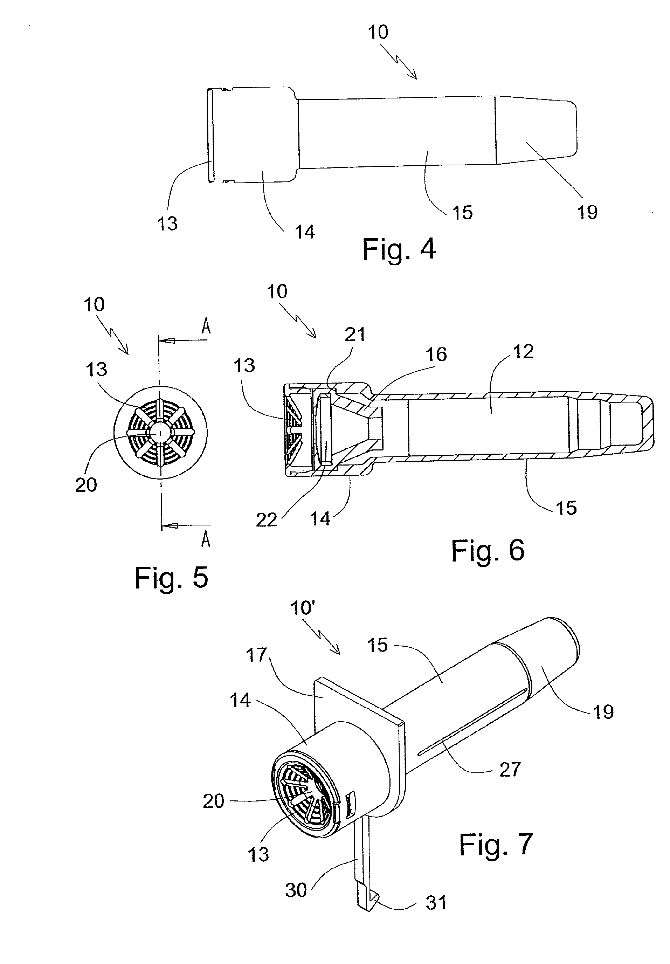

Figures 1 - 6 show a first embodiment of the invention, in which the adapter (10) is composed of a first element comprising the mouth (13) with a central opening (20), into which the cable (24) is inserted, a second adjacent element is the sealing element (16), and the third element is the outer body formed in turn by a front part (14) that covers the two aforementioned elements, a rear portion (15), and an end part (19). As can be seen in figure 6, both the first element (the mouth (13)) and the second element (the seal (16)) are inside the body of the adapter (14, 15, 19), both being at the front part (14). In the same drawing it is possible to see an annular recess (21) inside the adapter (10, 10'), which is what the seal (16) butts up against. The location of the securing ring (22) can also be seen, fitted to the front base of the sealing element (16). Finally, a longitudinal slot (27) on the exterior surface of the body of the adapter (10, 10') is also visible.

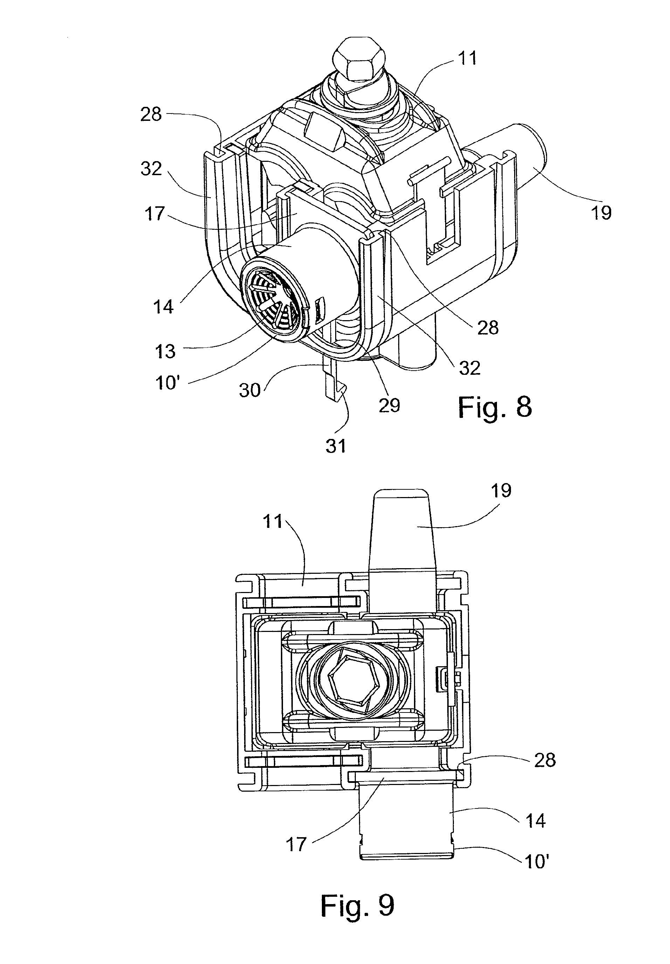

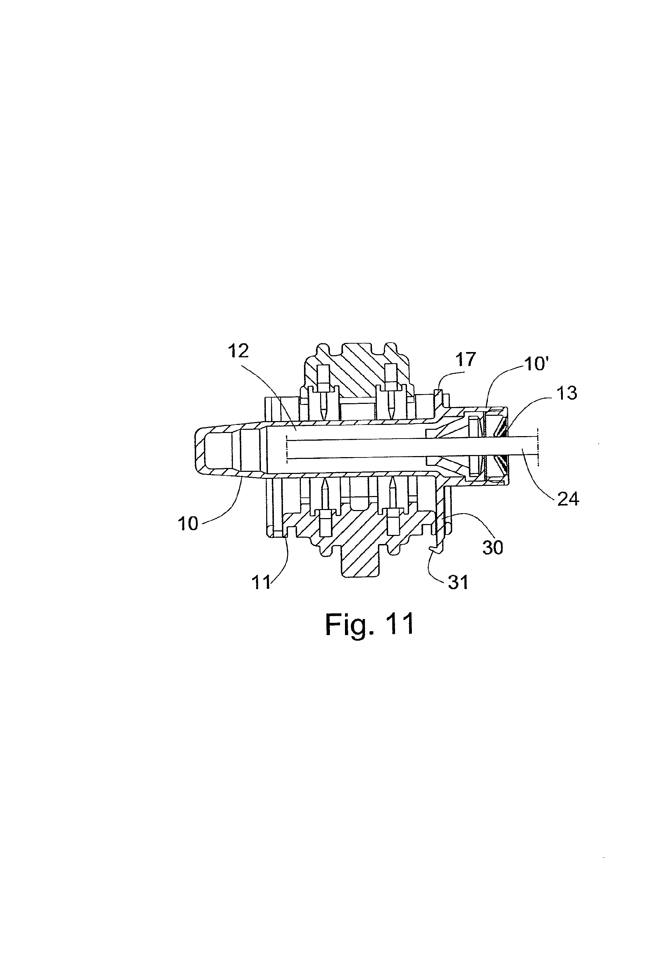

Figures 7 - 11 show a second embodiment of the adapter (10') referred to in this invention, in which the adapter is composed of the same elements as in the first, but it also incorporates a retaining plate (17) as part of the external body. Figures 8, 9, 10b and 11 illustrate the adapter (10') in operation in one of the two housings of a multi-section connector (11).

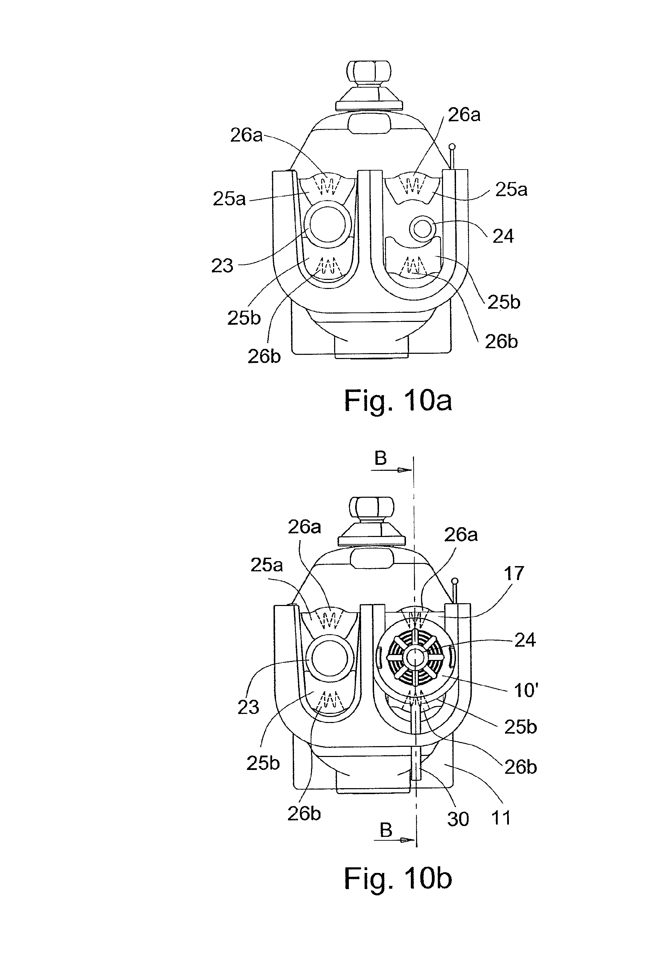

More specifically, figure 10a illustrates the layout with larger and smaller section cables (23, 24), each in their respective housings in the connector, and without using the adapter object of the invention (10, 10'). The larger diameter cable (23) is perfectly secured in a centred position with regard to the housings of the connector between the upper and lower pressure elements (25a, 25b), so that the upper and lower clamps (26a, 26b) are totally effective. However, the smaller diameter cable (23) is not centred laterally with regard to the housing, so the upper and lower clamps (26a, 26b) are not clamping correctly.

In contrast, figure 10b shows the situation in which an adapter (10') has been placed in the left hand side housing of the connector (11), so that the thinner cable (24) located inside the longitudinal opening (12) of the adapter (10') is perfectly centred, therefore electrical contact by perforation by means of the clamps (26a, 26b) on the external body of the adapter (10, 10') will be correct.

The positioning of the cable adapter (10, 10') in the electrical connector (11) is shown in figures 8 - 11, where one can see the vertical groove (28) in the U-shaped mouths (32) of the connector (11) in which the retaining plate (17) may be inserted perfectly, the elongated end portion (30) inserted in the through hole (29) located in the lower part of the U-shaped mouth (32) of one of the connector housings (11). This elongated end portion (30) has a clamp (31) in its free end. The cable adapter (10, 10') may rest on the lower pressure element (25b).

Having sufficiently described this invention using the figures attached, it is easy to understand that any modification may be made to the detail which may be deemed to be appropriate, whenever these changes do not alter the essence of the invention summarised in the following claims.

## Claims

1. Cable adapter for electrical connectors wherein these electrical connectors have toothed contacts inside, which make electrical contact with the cable by perforating its insulation and with one or more longitudinal housings to hold the respective cables, **characterised in that** the device is configured such as to be capable of being connected inside the longitudinal housing of an electrical connector and includes an elongate body provided with a longitudinal opening through which one or more electric cables having different cross-sections can pass and can be retained inside the same, thus making it possible, once the electric cable or cables have been inserted in the opening of the adapter, for the toothed contacts of the electrical connector to provide electrical contact by perforating the insulators of the cables.

2. Cable adapter for electrical connectors, according to the claim 1, **characterised in that** it has a front part or head of greater diameter, and a rear portion of greater length and smaller diameter, so said recess acts as a fitting surface and stop inside the housing the connector.

3. Cable adapter for electrical connectors, according to the claims 1 or 2, **characterised in that** the body of the adapter is closed at the rear, in a substantially conical shape.

4. Cable adapter for electrical connectors, according to the claims 1, 2 or 3, **characterised in that** it incorporates means to secure and centre the electric cable.

5. Cable adapter for electrical connectors, according to the claim 4, **characterised in that** these means of securing and centring have a mouth in the front of the longitudinal opening made of elastic elements that form a substantially conical-shaped radial structure that begins at the front of the adapter and extends partially back into the hole. This mouth has a central orifice, through which the electric cable is inserted.

6. Cable adapter for electrical connectors, according to any of claims 1-5, **characterised in that** it has means to seal the electric cable.

7. Cable adapter for electrical connectors, according to the claim 6, **characterised in that** these means for sealing comprise a truncated cone shaped element that adapts to the cable section, and that is fitted in the inner front part of the adapter, being positioned within the body, butted up against an annular recess on the inside of the adapter in an area close to the entrance of the orifice.

8. Cable adapter for electrical connectors, according to the claims 6 or 7, **characterised in that** means for sealing may also incorporate a ring for securing the sealing element, for which the ring fits to the frontal base of the sealing element.

9. Cable adapter for electrical connectors, according to any of claims 1-8, **characterised in that** it incorporates anchoring points for securing it to the connector.

10. Cable adapter for electrical connectors, according to any of claims 1-9, **characterised in that** it include a retaining plate having a design and thickness that enable a cable to be properly inserted in the vertical groove in the U-shaped mouths of the connector and thereby position it so that it cannot move.

11. Cable adapter for electrical connectors, according to the claim 10, **characterised in that** the retaining plate incorporates an elongated end designed to be inserted in a through hole in the lower base of the U-shaped mouth of the connector.

12. Cable adapter for electrical connectors, according to the claim 11, **characterised in that** this elongated end portion has a hook or clamp at the end.

13. Cable adapter for electrical connectors, according to any of the preceding claims, **characterised in that** the body of the adapter have one or more longitudinal slots on its external surface to enable the deformation of the body.

14. Cable adapter for electrical connectors, according to any of the preceding claims, **characterised in that** it is made from deformable and insulating material.

15. Kit formed by a cable adapter for electrical connectors as defined in any of preceding claims and a single-section or multi-section electrical connector.
